# EUROPEAN PATENT APPLICATION

(11) **EP 3 185 067 A1**
(43) Date of publication of application: **28.06.2017**
(21) Application number: 16739387.5
(22) Date of filing: 10.05.2016
(51) Int. Cl.: G02F 1/1333

(54) **DISPLAY DEVICE**

(30) Priority: 13.11.2015 CN 201520906646 U
(71) Applicant: LE Holdings (Beijing) Co., Ltd., Beijing 100025 (CN); Le Shi Zhi Xin Electronic Technology (Tianjin) Limited, Tianjin 300467 (CN)
(72) Inventor: JIANG, Yanmei, Beijing 300467 (CN)
(74) Representative: Botti, Mario
(86) International application number: PCT/CN2016/081570
(87) International publication number: WO 2017/080144

(57) **Abstract**

The invention provides a display device including a rear cover, a backlight module and a liquid crystal panel arranged in the rear cover, and a bezel, wherein a front wall of the bezel is magnetically connected with a front wall of a mold frame of the backlight module, and a sidewall of the bezel is magnetically connected with a sidewall of the rear cover. The bezel of the display device can be attractively secured to the mold frame and the rear cover thereof through magnets instead of bolts, and as compared with the prior art, operations of assembling the display device can be simplified to thereby improve a product quality of the display device, and also improve an overall appearance effect of the display device.

## Description

This application claims the benefit of Chinese Patent Application No. 201520906646.6, filed with the Chinese Patent Office on November 13, 2015 and entitled "Display device", which is hereby incorporated by reference in its entirety.

### Field

The present invention relates to the field of display technologies, and particularly to a display device.

### Background

As the sciences and technologies have been developed constantly, the consumers have posed their increasing demands for flat-panel displays, flat-panel TV sets, and other display devices, and the structures, appearances, performances, and other aspects of the display devices have been updated increasingly frequently.

An existing liquid crystal TV set includes a rear cover, a backlight module and a liquid crystal panel arranged in the rear cover, and a bezel assembled with the rear cover. Particularly the liquid crystal panel is assembled with a mold frame of the backlight module, and four sidewalls of the bezel are secured to the rear cover through bolts.

Drawbacks of the prior art above lie in that it may be operationally troublesome to assemble the bezel and the rear cover, and threaded holes may tend to skin in the bezel including the sidewalls secured through the bolts so that the threaded holes may not be concentric with the bolts, thus degrading the overall quality of the TV set; and moreover the bolts through which the bezel is secured to the rear cover may be exposed to the users, thus degrading the overall appearance effect of the TV set.

### Summary

The invention provides a display device so as to simplify operations of assembling the display device and to improve the product quality of the display device.

The display device according to the invention includes a rear cover, a backlight module and a liquid crystal panel arranged in the rear cover, and a bezel, wherein a front wall of the bezel is magnetically connected with a front wall of a mold frame of the backlight module, and a sidewall of the bezel is magnetically connected with a sidewall of the rear cover.

Preferably the bezel is a ferromagnetic metal bezel, a first groove is arranged on a front side of the front wall of the mold frame, and a first magnet is arranged in the first groove; and a second groove is arranged on an outside of the sidewall of the rear cover, and a second magnet is arranged in the second groove.

Preferably the first magnet is affixed to the first groove through a double-sided adhesive tape; and the second magnet is affixed to the second groove through a double-sided adhesive tape.

Preferably the thickness of the first magnet is not more than the depth of the first groove, and the thickness of the second magnet is not more than the depth of the second groove.

Optionally a shape of the first magnet is rectangular, circular, or elliptic; and a shape of the second magnet is rectangular, circular, or elliptic.

Preferably at least one first magnets are arranged respectively on a top front wall and both side front walls of the mold frame, and at least one second magnets are arranged respectively on a top sidewall and both side sidewalls of the rear cover.

Optionally a third magnet is arranged on an inside of the front wall of the bezel, and a fourth magnet attractive to the third magnet is arranged on a front side of the front wall of the mold frame; and a fifth magnet is arranged on an inside of the sidewall of the bezel, and a sixth magnet attractive to the fifth magnet is arranged on an outside of the sidewall of the rear cover, or the rear cover is a ferromagnetic metal rear cover.

Preferably the rear cover is an appearance rear cover of the display device, and the bezel is an appearance bezel of the display device.

Optionally the display device is a liquid crystal TV set or a liquid crystal display.

In the display device according to the invention, the bezel of the display device can be attractively secured to the mold frame and the rear cover thereof through the magnets instead of the bolts, and as compared with the prior art, the operations of assembling the display device can be simplified to thereby improve a product quality of the display device, and also improve an overall appearance effect of the display device.

### Brief Description of the Drawings

In order to make the technical solutions according to the embodiments of the invention more apparent, the drawings to which reference is made in the description of the embodiments will be described below briefly, and apparently the drawings described below are merely illustrative of some of the embodiments of the invention, and those ordinarily skilled in the art can further obtain other drawings from these drawings without any inventive effort. In the drawings:
Fig.1 is a schematic structural diagram of a part of a display device according to an embodiment of the invention;
Fig.2 is a schematic diagram of a bezel attractively attached to a rear cover in the display device according to the embodiment of the invention;
Fig.3 is a schematic diagram of the bezel attractively attached to a mold frame in the display device according to the embodiment of the invention; and
Fig.4 is a schematic structural diagram of the bezel disassembled from the mold frame and the rear cover in the display device according to the embodiment of the invention.

**Reference signs:**

| | | | |
|---|---|---|---|
| 1 | - Bezel | 10 | - Front wall of bezel |
| 11 | - Sidewall of bezel | 2 | - Mold frame |
| 20 | - Front wall of mold frame | 201 | - Top front wall of mold frame |
| 202 | - Side front wall of mold frame | 3 | - Liquid crystal panel |
| 4 | - Rear cover | 40 | - Sidewall of rear cover |
| 401 | - Top sidewall of rear cover | | |
| 402 | - Side sidewall of rear cover | | |
| 50 | - First magnet | 51 | - First groove |
| 60 | - Second magnet | 61 | - Second groove |

### Detailed Description of the Embodiments

In order to make the objects, technical solutions, and advantages of the invention more apparent, the technical solutions in the embodiments of the invention will be described below clearly and fully with reference to the drawings in the embodiments of the invention, and apparently the embodiments as described are merely a part but not all of the embodiments of the invention. All the other embodiments which can occur to those ordinarily skilled in the art from the embodiments here of the invention without any inventive effort shall fall into the scope of the invention as claimed.

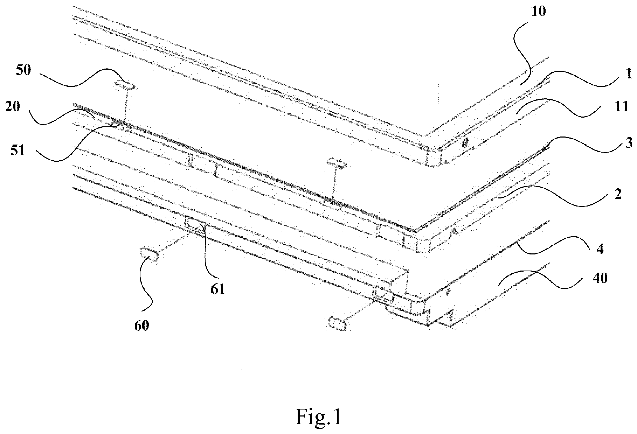

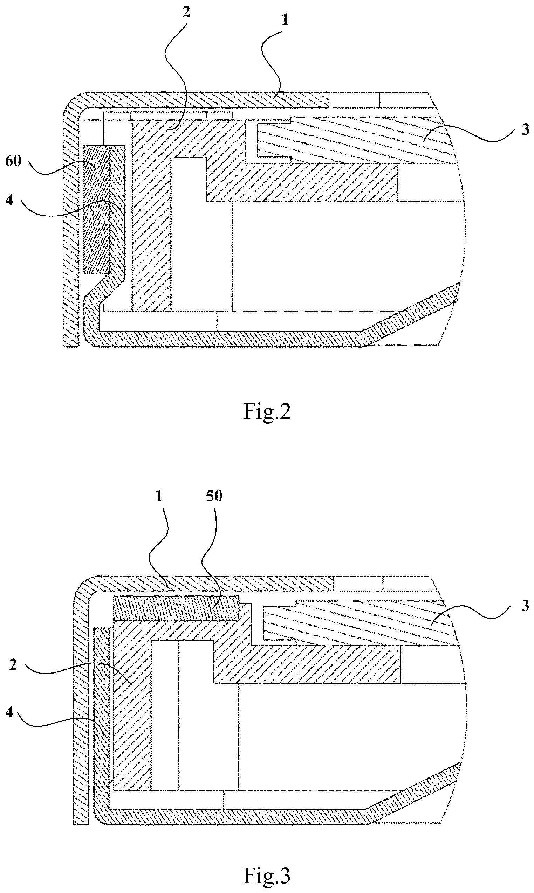

An embodiment of the invention provides a display device as illustrated in Fig.1 to Fig.3, which includes a rear cover 4, a backlight module (only a mold frame 2 of the backlight module is illustrated) and a liquid crystal panel 3 arranged in the rear cover 4, and a bezel 1, where a front wall 10 of the bezel is magnetically connected with a front wall 20 of the mold frame of the backlight module, and a sidewall 11 of the bezel is magnetically connected with a sidewall 40 of the rear cover.

In the embodiment of the invention, the "front" refers to the side of a component near a user, and the "back" refers to the side of the component away from the user.

In the technical solution according to the invention, the bezel 1 is a ferromagnetic metal bezel, e.g., an iron bezel, a nickel bezel, a cobalt bezel, etc. The rear cover 4, and the mold frame 2 of the backlight module will not be limited to any particular material, but can be of metal or nonmetal; and typically the rear cover is a metal rear cover, and the mold frame is a plastic mold frame.

As illustrated in Fig.1, there is a first groove on the front side of the front wall of the mold frame in the display device according to the embodiment of the invention, and a first magnet is arranged in the first groove; and there is a second groove on the outside of the sidewall of the rear cover, and a second magnet is arranged in the second groove, where the first magnet can be fixed in the first groove in any appropriate manner, for example, the first magnet can be affixed in the first groove by a double-sided adhesive tape; and alike the second magnet can be fixed in the second groove in any appropriate manner, for example, the second magnet can be affixed in the second groove by a double-sided adhesive tape. After the bezel is assembled with the mold frame and the rear cover, the bezel is firmly fit to the mold frame and the rear cover so that the display device is very convenient to operate.

In a preferred embodiment of the invention, the thickness of the first magnet is not more than the depth of the first groove, and the thickness of the second magnet is not more than the depth of the second groove. With this design, the bezel of the display device can be assembled with the rear cover and the mold frame thereof more conveniently and reliably.

In the technical solution according to the embodiment of the invention, as illustrated in Fig.1 to Fig.4, the first magnet 50 and the second magnet 60 will not be limited to any particular shape, for example, the shape of the first magnet can be rectangular, circular, or elliptic, and alike the shape of the second magnet can be rectangular, circular, or elliptic, where the shape of the first magnet 50 matches the shape of the second groove 51, and the shape of the second magnet 60 matches the shape of the second groove 61.

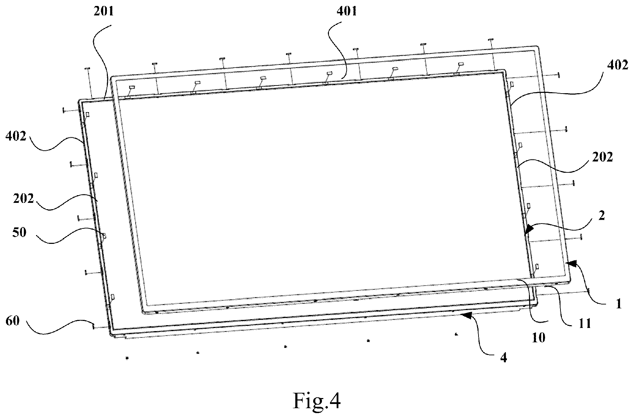

As illustrated in Fig.4, the user using the display device typically can see the top and both the left and right sides of the display device, but the bottom of the display device typically can not be seen by the user; and in this embodiment, at least one first magnets 50 are arranged respectively on a top front wall 201 of the mold frame, and side front walls 202 of the mold frame, and at least one second magnets 60 are arranged respectively on a top sidewall 401 of the rear cover, and side sidewalls 402 of the rear cover. The display device can be assembled by aligning in position the rear cover, the bezel, and the mold frame of the backlight module so that the bezel can be firmly fit to the rear cover and the mold frame by magnetism of the magnets so as to assemble the display device reliably; and moreover since there is no magnet arranged on the sides of the bottom of the rear cover in the display device, the display device can be disassembled conveniently from the bottom thereof, thus facilitating subsequent maintenance.

In another embodiment of the invention, a third magnet is arranged on the inside of the front wall of the bezel, and a fourth magnet attractive to the third magnet is arranged on the front side of the front wall of the mold frame; and a fifth magnet is arranged on the inside of the sidewall of the bezel, and a sixth magnet attractive to the fifth magnet is arranged on the outside of the sidewall of the rear cover, or the rear cover is a ferromagnetic metal rear cover.

In a preferred embodiment of the invention, the rear cover of the display device is an appearance rear cover of the display device, and the bezel is an appearance bezel of the display device. As compared with the prior art, this embodiment can greatly simplify the structure of the display device, lower a cost of production of the display device, and enable the display device to be easily designed with an ultra-thin and ultra-narrow edge frame.

The display device according to the embodiments of the invention will not be limited to any particular type, but can be a liquid crystal TV set, a liquid crystal display, etc., for example.

In the display device according to the embodiments of the invention, the bezel of the display device can be attractively secured to the mold frame and the rear cover thereof through the magnets instead of the bolts, and as compared with the prior art, the operations of assembling the display device can be simplified to thereby improve the product quality of the display device, and also improve the overall appearance effect of the display device.

Lastly it shall be noted that the foregoing embodiments are merely intended to illustrate but not to limit the technical solutions of the invention; and although the invention has been described in details with reference to the foregoing embodiments, those ordinarily skilled in the art shall appreciate that the technical solutions recited in the foregoing respective embodiments can be modified or equivalent substitutions can be made to a part of the technical features thereof; and the essence of the corresponding technical solutions will not depart from the spirit and scope of the technical solutions according to the respective embodiments of the invention due to these modifications or substitutions.

## Claims

1. A display device, comprising a rear cover, a backlight module and a liquid crystal panel arranged in the rear cover, and a bezel, wherein a front wall of the bezel is magnetically connected with a front wall of a mold frame of the backlight module, and a sidewall of the bezel is magnetically connected with a sidewall of the rear cover.

2. The display device according to claim 1, wherein the bezel is a ferromagnetic metal bezel, a first groove is arranged on a front side of the front wall of the mold frame, and a first magnet is arranged in the first groove; and a second groove is arranged on an outside of the sidewall of the rear cover, and a second magnet is arranged in the second groove.

3. The display device according to claim 2, wherein the first magnet is affixed to the first groove through a double-sided adhesive tape; and the second magnet is affixed to the second groove through a double-sided adhesive tape.

4. The display device according to claim 2, wherein a thickness of the first magnet is not more than a depth of the first groove, and a thickness of the second magnet is not more than a depth of the second groove.

5. The display device according to claim 2, wherein a shape of the first magnet is rectangular, circular, or elliptic; and a shape of the second magnet is rectangular, circular, or elliptic.

6. The display device according to claim 2, wherein at least one first magnets are arranged respectively on a top front wall and both side front walls of the mold frame, and at least one second magnets are arranged respectively on a top sidewall and both side sidewalls of the rear cover.

7. The display device according to claim 1, wherein:
a third magnet is arranged on an inside of the front wall of the bezel, and a fourth magnet attractive to the third magnet is arranged on a front side of the front wall of the mold frame; and
a fifth magnet is arranged on an inside of the sidewall of the bezel, and a sixth magnet attractive to the fifth magnet is arranged on an outside of the sidewall of the rear cover, or the rear cover is a ferromagnetic metal rear cover.

8. The display device according to any one of claims 1 to 7, wherein the rear cover is an appearance rear cover of the display device, and the bezel is an appearance bezel of the display device.

9. The display device according to any one of claims 1 to 7, wherein the display device is a liquid crystal TV set or a liquid crystal display.
